# EUROPÄISCHE PATENTANMELDUNG

(11) **EP 0 869 265 A1**
(43) Veröffentlichungstag der Anmeldung: **07.10.1998**
(21) Anmeldenummer: 98106172.4
(22) Anmeldetag: 03.04.1998
(51) Int. Cl.: F01N 7/08, F01N 7/10

(54) **Fluidführungselement**

(30) Priorität: 04.04.1997 DE 19713963
(71) Anmelder: Prototechnik GmbH, 73529 Schwäbisch Gmünd (DE)
(72) Erfinder: Gersmann, Karl-Heinz, 73527 Tierhaupten (DE)
(74) Vertreter: Fischer, Matthias, Dipl.-Ing.

(57) **Zusammenfassung**

Es wird ein thermisch belastbares Fluidführungselement, insbesondere ein Auspuffkrümmer für Verbrennungsmotoren, mit wenigstens einem motorseitigen und wenigstens einem auspuffseitigen Flansch, zwischen denen sich eine Gehäusewand erstreckt, vorgeschlagen, dadurch gekennzeichnet, daß die Gehäusewand (7; 107) im wesentlichen aus unterschiedlichen durch Laserschweißen miteinander verbundenen Blechen (2, 4, 6; 102, 104, 106) besteht. Das Fluidführungselement kann so weitergebildet sein, daß die Bleche (2, 4, 6; 102, 104, 106) unterschiedliche Wandstärken haben und/oder aus unterschiedlichen Legierungen bestehen. Vorteilhafte Weiterbildungen der Erfindung bestehen in Fluidführungselementen, die durch in unverformtem oder verformtem Zustand miteinander verschweißte Bleche (2, 4, 6; 102, 104, 106) gekennzeichnet sind.

## Beschreibung

Die vorliegende Erfindung betrifft ein thermisch belastbares Fluidführungselement, insbesondere einen Auspuffkrümmer für Verbrennungsmotoren, mit Wenigstens einem motorseitigen und wenigstens einem auspuffseitigen Flansch, zwischen denen sich eine Gehäusewand erstreckt, sowie ein Verfahren zur Herstellung desselben.

Derartige Fluidführungselemente, insbesondere Auspuffkrümmer sind dem Fachmann beispielsweise aus der deutschen Patentschrift DE 33 26 259 C2 bekannt. Es handelt sich hierbei um thermisch und dynamisch hochbelastete Bauteile für den Motorenbau. So sind die unterschiedlichen Wärmedehnungen des Auspuffkrümmers einerseits und des Zylinderkopfes andererseits zu kompensieren. In der genannten Patentschrift wird vorgeschlagen, mit als Stützen ausgebildeten Formstabilisatoren den Auspuffkrümmer beim Erkalten wieder in seine ursprüngliche Gestalt zurückführen. Dennoch auftretende Verzugserscheinungen führen aber trotzdem oft vorzeitig insbesondere in Bereichen, die aufgrund ihrer Geometrie nicht ausreichend elastisch sind, zu Materialermüdung und schließlich zu Undichtigkeit bzw. Bruch des Krümmers, mit der Folge, daß er ausgetauscht werden muß.

Die bekannten Fluidführungselemente werden in der Regel aus einzelnen Rohrstücken und aufgrund der Komplexität der jeweiligen Auspuffgeometrie schwierigen Zwischenteilen gasdicht zusammengschweißt. Dabei sind zur Vorbereitung der Schweißung die zu verschweißenden Kanten sehr zeit- und kostenaufwendig zu kalibrieren und einander anzupassen. Die Einrichtung der Einzelteile zueinander direkt vor dem Schweißen ist ein weiterer zeitaufwendiger Vorgang. Das Verschweißen der Einzelteile "in situ" stellt, nebenbei bemerkt, hohe Anforderungen an heute übliche Schweißautomaten und deren Steuerung und erfordert auch bei manueller Verschweißung einen äußerst geschickten Fachmann. Daraus ergeben sich weitere erhöhte Herstellungskosten.

Der vorliegenden Erfindung liegt die Aufgabe zugrunde, ein thermisch belastbares Fluidführungselement, insbesondere einen Auspuffkrümmer für Verbrennungsmotoren sowie ein Verfahren zu seiner Herstellung zu entwickeln, wobei die eben beschriebenen Nachteile vermieden oder zumindest stark verringert werden.

Diese Aufgabe wird erfindungsgemäß zum einen gelöst durch ein thermisch belastbares Fluidführungselement, insbesondere einen Auspuffkrümmer für Verbrennungsmotoren, mit wenigstens einem motorseitigen und Wenigstens einem auspuffseitigen Flansch, zwischen denen sich eine Gehäusewand erstreckt, der dadurch gekennzeichnet ist, daß die Gehäusewand im wesentlichen aus unterschiedlichen durch Laserschweißen miteinander verbundenen Blechen besteht. Durch die erfindungsgemäße Lösung ergibt sich der Vorteil, daß eine besondere zeit- und kostenintensive Vorbereitung der zu verschweißenden Kanten entfällt. Die mittels Laserschweißen stumpf verschweißten Gehäusewandbleche müssen im Nahtbereich nicht mehr nachbehandelt werden.

Eine vorteilhafte Weiterbildung der Erfindung ergibt sich dadurch, daß die Bleche unterschiedliche Wandstärken haben. Es ist dadurch möglich, daß, abhängig von örtlich gewünschten Materialeigenschaften, ausgewählte Blechsorten eingesetzt werden können. So können nun für besonders spannungs-/dehnungsgefährdete Zonen z. B. enge Radien im Bereich der Flansche oder Rohrzusammenführungen Bleche einer Legierung mit niedrigem Wärmeausdehnungskoeffizienten oder besonders dünne Bleche eingesetzt werden. In unverformtem Zustand können Bleche je nach späterer lokaler Beanspruchung im Fluidführungselement wie Mosaiksteine zueinanderpassend zusammengeschweißt werden, so daß sich daraus eine optimal problemadaptierte Gehäusewand herstellen läßt. Damit werden in vorteilhafter Weise Spannungsrisse oder -brüche und Verzüge aufgrund thermischer Wechselbeanspruchung vermieden. In einer vorteilhaften Weiterbildung der Erfindung werden sowohl Bleche unterschiedlicher Stärke als auch unterschiedlicher Zusammensetzung verwendet und dabei die Vorteile gezielter Auswahl der Blechmaterialien bzgl. der Festigkeit, Kerbwirkung, thermischer Ausdehnung und Fließgrenze sowie der Materialstärke ausgenützt.

In einer vorteilhaften Weiterbildung der Erfindung werden die Bleche in unverformtem Zustand miteinander verschweißt. Hierdurch ergibt sich der Vorteil, daß die Innenkontur der Gehäusewand optimal für die Gasströmung gestaltet ist. Die Verhältnisse im Bereich der Schweißnähte im Rohrinneren sind bereits vom umverformten Blech her bekannt und beur-teilbar.

Die Aufgabe wird erfindungsgemäß zum anderen gelöst durch ein Verfahren zur Herstellung eines Fluidführungselementes nach Anspruch 4, das durch folgende Schritte gekennzeichnet ist: Zuschneiden der Bleche, Verschweißen der Bleche, Umformen der Bleche zur Gehäusewand, Verschweißen zueinanderzeigender Gehäusewandkanten und Anbringen der Flansche.

Dadurch werden Vorbereitungen zur Verbindung vorgefertigter Gehäuseteile überflüssig. Die "Vorfertigung" besteht im wesentlichen nur in der Auswahl und im Zuschnitt der gewünschten Blechsorten. Nach dem Umformen der Bleche zur Gehäusewand - diese kann nun schon in etwa die Form eines Rohres oder die Form zweier oder mehrerer Gehäusewandschalen haben - werden die zueinanderzeigenden Gehäusewandkanten miteinander verschweißt. Da die Umformung schon die Ausrichtung der Gehäusewandkanten zueinander ergibt, ist die Einrichtung der zu verschweißenden Teile sehr einfach und ohne großen Aufwand zu bewerkstelligen. Das folgende Anschweißen der Flansche ist aus demselben Grund günstig durchführbar.

Die Aufgabe wird auch gelöst durch ein Verfahren zur Herstellung eines Fluidführungselementes nach Anspruch 5, das durch folgende Schritte gekennzeichnet ist: Verschweißen der Bleche und Anbringen der Flansche.

In einer vorteilhaften Weiterbildung der Erfindung folgt dem Verschweißen der Gehäusewandkanten ein weiteres Umformen der Gehäusewand. Als besonders vorteilhaft hat sich hierbei das Umformen durch Innen-Hochdruck-Umformung (IHU) gezeigt, wodurch bisher nur äußerst schwierig oder gar nicht herstellbare Gehäusewandformen möglich sind.

Ausführungsbeispiele mit weiteren Merkmalen der Erfindung werden im folgenden anhand der Zeichnungen beschrieben.
- Figur 1: zeigt schematisch in perspektivischer Ansicht eine Ausführungsform eines erfindungsgemäßen Fluidführungselementes.
- Figur 1a: zeigt in Grundrißansicht für die Gehäusewand des in Fig. 1 dargestellten Fluidführungselementes vorgesehene zu verschweißende Bleche in unverformtem Zustand.
- Figur 1b: zeigt die in Figur 1a gezeigten Bleche nach dem Verschweißen.
- Figur 1c: zeigt in perspektivischer Ansicht die nach Figur 1b verschweißten Bleche nach dem Umformen zur Gehäusewand.
- Figur 1d: zeigt die zur Gehäusewand umgeformten Bleche nach Verschweißen der Gehäusewandkanten.
- Figur 1e: zeigt in perspektivischer Ansicht eine Abwandlung des in Figur 1 gezeigten Fluidführungselementes, dessen Rohrmittelbereich einer weiteren Umformung unterzogen wurde.
- Figur 2: zeigt schematisch im Grundriß ein weiteres Ausführungsbeispiel gemäß der Erfindung.
- Figur 2a: zeigt in Grundrißansicht für die Gehäusewand des in Fig. 2 dargestellten Krümmers vorbereitete Bleche in unverformtem Zustand.
- Figur 2b: zeigt die in Figur 2a dargestellten Bleche nach dem Verschweißen.
- Figur 2c: zeigt im Grundriß eine Gehäusewandschale nach dem Umformen der verschweißten Bleche.
- Figur 2d: zeigt im Aufriß zwei im wesentlichen spiegelbildlich zueinander zeigende Gehäusewandhälften, deren Gehäusewandkanten miteinander verschweißt sind.

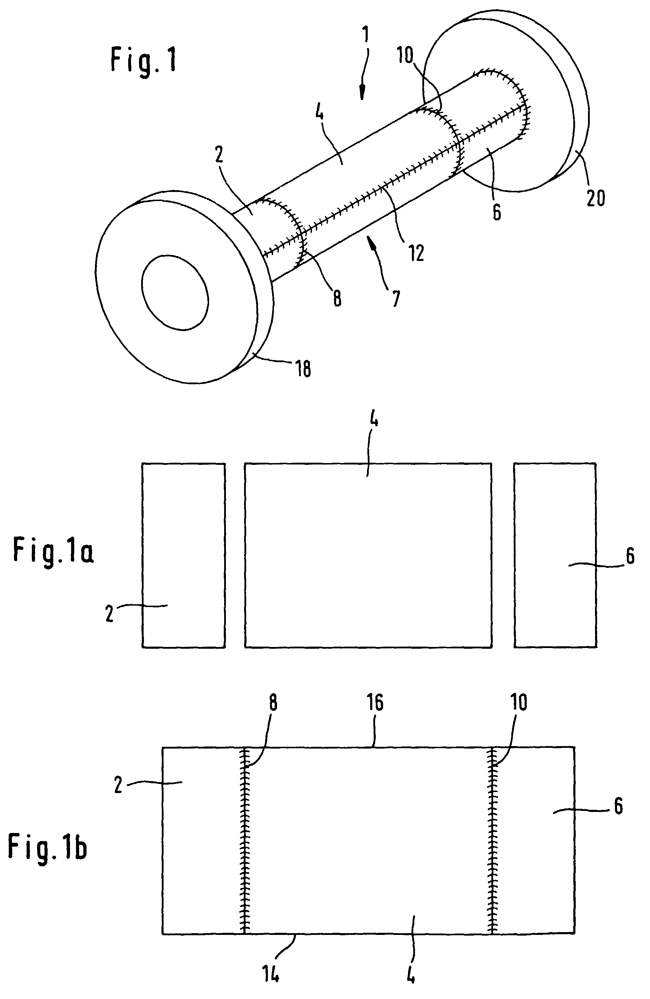

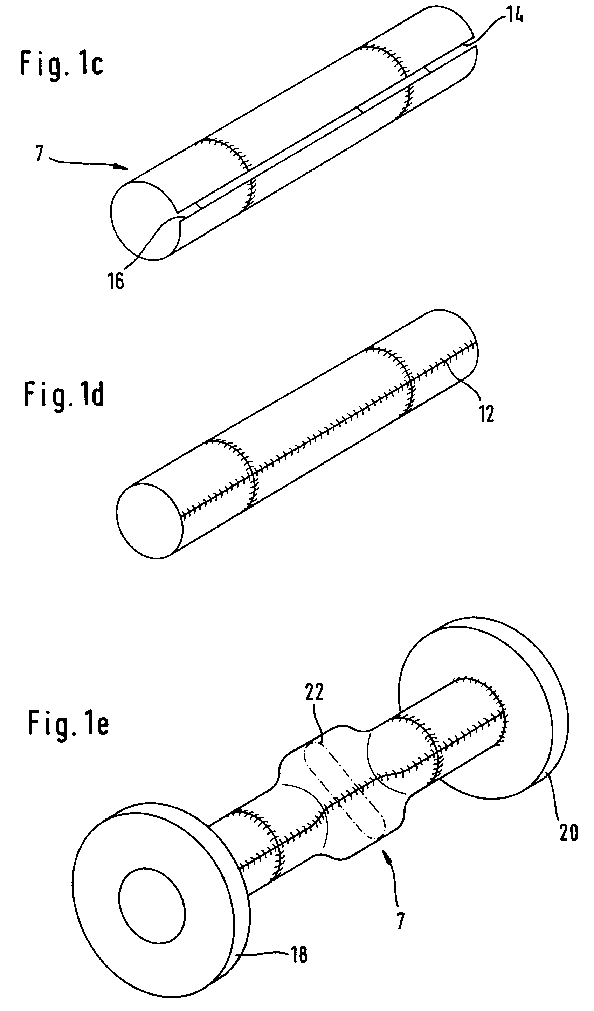

Figur 1 zeigt ein thermisch belastbares Fluidführungselement 1 ausgebildet als Auspuffkrümmer mit einem motorseitigen Flansch 20 und einem auspuffseitigen Flansch 18. Zwischen den beiden Flanschen erstreckt sich eine Gehäusewand 7, die sich aus Blechen 2, 4 und 6 zusammensetzt. Hierbei sind die Bleche 2 und 4 über eine Schweißnaht 8 und die Bleche 4 und 6 über eine Schweißnaht 10 miteinander verbunden.

Haben die Bleche bereits die Gestalt von Rohren 2, 4 und 6, d. h. sind sie in verformtem Zustand gemaß Anspruch 4 z. B. über Laserschweißnähte 8 bzw. 10 miteinander verschweißt, fällt natürlich die mit dem Bezugszeichen 12 angegebene Schweißnaht weg.

Bei einer Ausführungsform nach Anspruch 4 werden die Bleche in unverformtem planen ebenen Zustand, wie in Figur 1a dargestellt, hergerichtet und wie in Figur 1b dargestellt, zusammengeschweißt. Nachdem sie dann in die in Figur 1c dargestellte rohrförmige Gestalt umgeformt worden sind, werden sie entlang ihrer Gehäusekanten 14 und 16 mittels einer Schweißnaht 12 zusammengeschweißt. Im Bereich des Übergangs zwischen Gehäusewandblech 6 und Flansch 20 sowie Gehäusewandblech 2 und Flansch 18 sind diese ebenfalls innen oder außen gasdicht miteinander verschweißt. Die folgenden Figuren 1a bis 1d skizzieren Phasen im Entstehungsprozeß eines erfindungsgemäßen Fluidführungselementes.

Figur 1a zeigt wie oben bereits erwähnt die für die Gehäusewand 7 vorgesehenen Bleche 2, 4 und 6, wobei deren zu verschweißende Kanten bereits zueinander zeigend eingerichtet sind.

Figur 1b stellt im Grundriß die bereits verschweißten Bleche von Figur 1a dar, die mittels Schweißnahten 8 und 10 miteinander verbunden sind. Die Bleche haben nun zwei gemeinsame Gehäusekanten 14 und 16. Die Verschweißung kann auf jede konventionelle Schweißart erzeugt werden, wobei sich eine Laserverschweißung stumpfer Blechkanten als die optimale Verbindungsart erwiesen hat.

Figur 1c zeigt die zusammengeschweißten Bleche 2, 4 und 6 nach der Umformung zu einem Rohr. Die gemeinsamen Gehäusewandkanten 14 und 16 der Gehäusewand 7 zeigen nun direkt zu einander und sind im Umformungsprozeß in die Position gebracht worden, in der sie verschweißt werden sollen.

Figur 1d zeigt die Gehäusewand 7 nach Herstellung der die Gehäusewandkanten 14 und 16 verbindenden Schweißnaht 12.

Eine weitere vorteilhafte Ausführungsform der Erfindung ist in Figur 1e dargestellt, wobei hier ein im wesentlichen gemäß Figur 1 vorbereitetes Fluidführungselement im Mittelbereich 22 der Gehäusewand 7 durch eine weitere Verformung auf einen ovalen oder nahezu rechteckigen Querschnitt gebracht wurde. Diese beispielhafte Verformung ist hier nur prinzipiell dargestellt. Es ist jede nach Motor- bzw. Motorraum - oder Kraftfahrzeugtyp benötigte Umformung der Gehäusewand 7 in verschiedenen Bereichen denkbar. Als besonders zweckmäßig und vorteilhaft hat sich für eine derartige Verformung die sogenannte Innen-Hochdruck-Umformung (IHU) gezeigt. Hierbei wird das Fluidführungselement in eine Form gelegt, deren Innenkontur größer ist als die Außenkontur des Fluidführungselementes und die Endaußenkontur hat, die das Fluidführungselement letztendlich haben soll. Das noch nicht fertig umgeformte Fluidführungselement wird in eine Hälfte einer Konturform eingelegt. Dann wird die komplementäre Formschale darüber gelegt. Nach Verschließen der beiden Enden des Fluidführungselementes wird in das Innere des Fluidführungselementes ein Druckfluid angebracht, das derart unter Druck gesetzt wird, daß sich die Gehäusewand 7 an die Innenkontur der Form anlegt. Nach Beendigung der Umformung durch das Druckfluid kann das fertig umgeformte Fluidführungselement nach Öffnen der Formschalen fertig geformt entnommen werden.

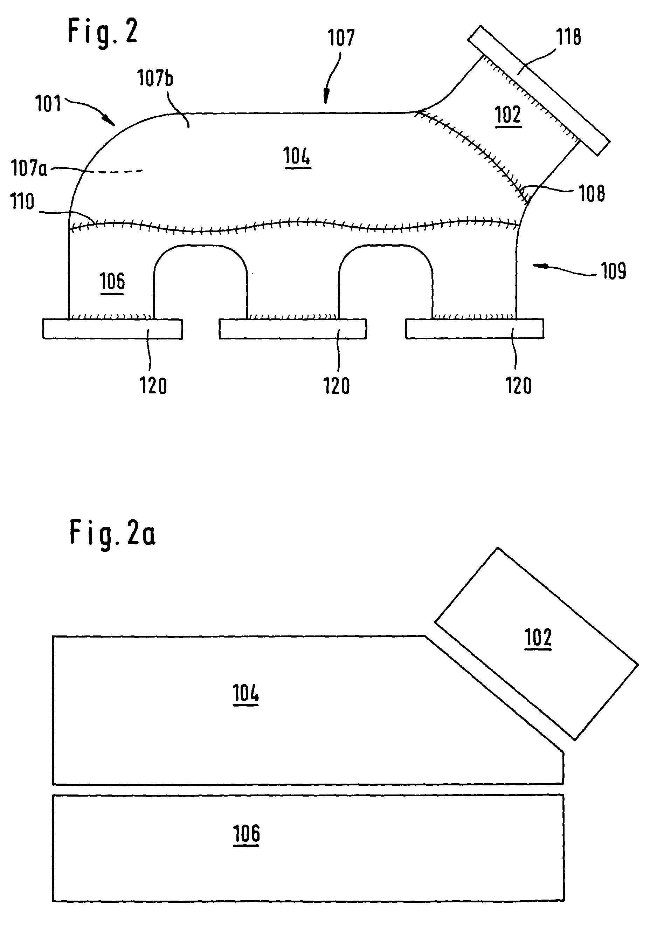

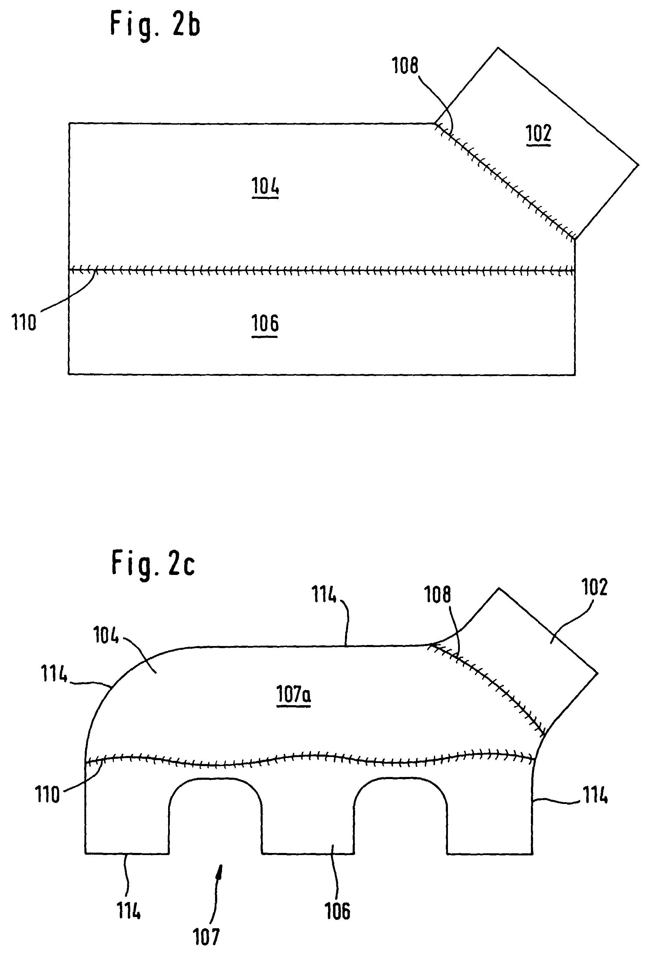

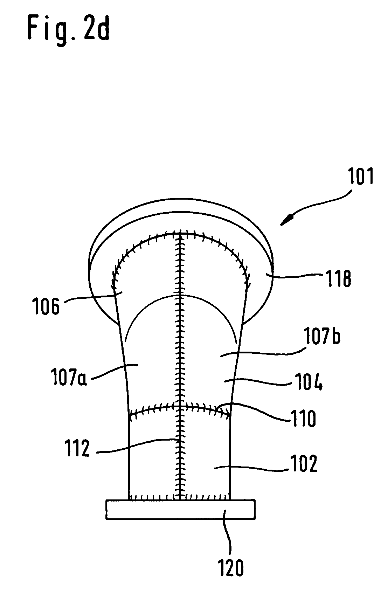

Figur 2 zeigt ein weiteres Ausführungsbeispiel der Erfindung. Hier ist aus Vereinfachungsgründen im Grundriß ein Auspuffkrümmer dargestellt, der für einen Drei- oder Sechszylindermotor denkbar ist. Der Krümmer 101 weist drei Flansche 120 auf, die in ein Gehäuse 109 münden. Ein auspuffseitiger Flansch 118 "schließt" das Fluidführungselement 101 zum Auspuff hin ab. Auch hier ist wie im zuvor beschriebenen Ausführungsbeispiel die Gehäusewand 107 aus Blechen 102, 104 und 106 zusammengesetzt. Im Unterschied zur soeben beschriebenen rohrförmigen Ausführungsform der Erfindung ist der in Figur 2 beschriebene Auspuffkrümmer 101 jedoch aus zwei komplementären Schalen 107a und 107b zusammengesetzt. In den folgenden Figuren 2a bis 2d werden einzelne Schritte im Herstellungsverfahren zu einem Ausführungsbeispiel eines erfindungsgemäßen Auspuffkrümmers kurz skizziert.

Figur 2a zeigt im Grundriß die für die Gehäusewand 7 vorgesehenen Bleche 102, 104 und 106 vor dem Verschweißen. Figur 2b zeigt dieselben Bleche, nun verschweißt über die Schweißnähte 108 und 110. Nach dem Verformen zu einer Gehäuseschale 107a sieht diese so aus, wie sie in Figur 2c dargestellt ist. Hierbei ist zu erkennen, daß das ursprünglich ebene Blech 106 nun bereits die Position der später anzufügenden Flansche 120 andeutet. Auch die ursprünglich geraden, in der Ebene dargestellten, Schweißnähte 108 und 110 sind nun, infolge der Umformung etwas verzogen, gut erkennbar. Im Bereich des zukünftigen Flansches 118 (Fig. 2) bzw. im Bereich der zukünftigen Flansche 120 wurden z. B. Bleche 102 und 106 einer anderen Wandstärke oder Festigkeit eingesetzt, als im Mittelteil 104 der Gehäusewand 107a. So kann in vorteilhafter Weise die Blechstärke für die Bleche 102 und 106 dicker sein, da die Gehäusewandzonen dieser Bereiche beim Umformen wesentlich stärker beansprucht werden als die Gehäusewand 107 im Bereich des Bleches 104, das deshalb eine geringere Wandstärke haben kann. Ebenso kann für die Bleche 102 und 106 ein Blechmaterial eingesetzt werden, das einen wesentlich geringeren thermischen Ausdehnungskoeffizienten hat, als das Blechmaterial für das Blech 104. Es geht hierbei beim Motorenbau bzw. beim Bau von am Motor angegliederten Komponenten nicht nur um Funktionssicherheit (minimale Verzüge, keine Verzugsrisse etc.), sondern auch um Gewichteinsparung. Deshalb ist es von Vorteil, beispielsweise für einen Gehäusewandbereich, der hier mit dem Blech 104 dargestellt ist, dünnere Wandstärken zu wählen. Gewichtsersparnis wirkt sich direkt auf den Kraftstoffverbrauch aus, was sowohl bei Rennfahrzeugen als auch ganz allgemein im Hinblick auf Umwelt und Energieresourcen heute ein äußerst wichtiges Arbeitsziel im Motorenbau ist.

Entsprechende Blechauswahl vor dem Verformen kann jedoch auch dazu dienen, um eine im endgültigen Bauteil gleichmäßige Wandstärke zu erreichen. Stark zu verziehende Bleche können aus dickerem Material zusammengeschweißt werden, das sich während des Umformens nach und nach der Wandstärke der weniger verformten Bleche in der Wandstärke anpäßt.

Mit Anwendung des erfindungsgemäßen Verfahrens kann auf viele individuelle Anforderungen eingegangen werden, die bei einem Fluidführungselement bzw. Auspuffkrümmer lokal entstehen. So kann detailliert auf gewünschte Festigkeit, Steifigkeit und Qualität des Werkstoffes und auch auf Preisaspekte Rücksicht genommen werden. Sämtliche beim Stand der Technik notwendigen Kompromisse zwischen thermischer Belastbarkeit, Gewicht und kostengünstiger Herstellbarkeit fallen bei Fluidführungselementen gemaß der Erfindung weg. Teures Vorbereiten von zu verbindenden Auspuffteilen über Aufweiten, Kalibrieren und lokales Schweißen sind nicht mehr nötig.

Figur 2c zeigt im Grundriß die Gehäusewandhälfte 107a, die man sich in die Zeichenebene konkav erstreckend vorstellen muß. Die hier dargestellte Gehäusewandhälfte besteht aus den zusammengeschweißten Blechen 102, 104 und 106, die nach dem Verschweißen als Verbund in eine "dreidimensionale" Form gebracht wurden, und zeigt mit ihrer Gehäusewandkante 114 zum Betrachter.

Es ist auch denkbar, die vorliegende Erfindung zur Vermeidung der bisher teilweise aus thermischen Gründen notwendigen Doppelschalenlösung einzusetzen.

Figur 2d zeigt nun zwei komplementäre Gehäusewandschalen 107a und 107b miteinander verschweißt entlang einer Schweißnaht 112. Nach Anbringen der Flansche 118 und 120 ergibt sich das in Figur 2 dargestellte Fluidführungselement 101. Die die Bleche 104 und 106 verbindende Schweißnaht 112 ist in Figur 2d nicht zu sehen.

Zu beachten ist, däß die in den Figuren dargestellten Ausführuungsbeispiele nur qualitativ zu sehen sind, da es im vorliegenden Fall auf quantitative Aspekte wie z. B. Proportionalität nicht ankam. Die hier nur beispielhaft dargestellten Fluidführungselemente vertreten eine zahllose Form von Fluidführungselementen, die gemäß der Erfindung hergestellt und ausgestaltet sein können. Die sich aus der Erfindung ergebenden Vorteile sind für sämtliche Gestaltvariationen ebenso denkbar.

## Patentansprüche

1. Thermisch belastbares Fluidführungselement, insbesondere Auspuffkrümmer für Verbrennungsmotoren, mit wenigstens einem motorseitigen und wenigstens einem auspuffseitigen Flansch, zwischen denen sich eine Gehäusewand erstreckt, **dadurch gekennzeichnet**, daß die Gehäusewand (7; 107) im wesentlichen aus unterschiedlichen durch Laserschweißen miteinander verbundenen Blechen (2, 4, 6; 102, 104, 106) besteht.

2. Fluidführungselement nach Anspruch 1, **dadurch gekennzeichnet**, daß die Bleche (2, 4, 6; 102, 104, 106) unterschiedliche Wandstärken haben.

3. Fluidführungselement nach Anspruch 1 oder 2, **dadurch gekennzeichnet**, daß die Bleche (2, 4, 6; 102, 104, 106) aus unterschiedlichen Legierungen bestehen.

4. Fluidführungselement nach Anspruch 1, 2 oder 3, **gekennzeichnet durch** in unverformtem Zustand miteinander verschweißte Bleche (2, 4, 6; 102, 104, 106).

5. Fluidführungselement nach Anspruch 1, 2 oder 3, **gekennzeichnet durch** in verformtem Zustand miteinander verschweißte Bleche (2, 4, 6).

6. Verfahren zur Herstellung eines Fluidführungselementes nach Anspruch 4, **gekennzeichnet durch** folgende Schritte:
a) Zuschneiden der Bleche
b) Verschweißen der Bleche,
c) Umformen der Bleche zur Gehäusewand,
d) Verschweißen zueinanderzeigender Gehäusewandkanten,
e) Anbringen der Flansche.

7. Verfahren zur Herstellung eines Fluidführungselementes nach Anspruch 5, **gekennzeichnet durch** folgende Schritte:
a) Verschweißen der Bleche,
b) Anbringen der Flansche.

8. Verfahren nach Anspruch 6 oder 7, **dadurch gekennzeichnet**, daß vor oder nach dem Schritt "Anbringen der Flansche" noch folgender Schritt durchgeführt wird:
e) Weiteres Umformen der Gehäusewand.

9. Verfahren nach Anspruch 6 oder 8, **dadurch gekennzeichnet**, daß das Umformen durch Ziehen erreicht wird.

10. Verfahren nach Anspruch 6 oder 8, **dadurch gekennzeichnet**, daß das Umformen durch Innen-Hochdruck-Umformung (IHU) erreicht wird.
